# EUROPEAN PATENT SPECIFICATION

(11) **EP 1 814 285 B1**
(45) Date of publication and mention of the grant of the patent: **14.03.2012**
(21) Application number: 07001386.7
(22) Date of filing: 23.01.2007
(51) Int. Cl.: H04M 1/02

(54) **Sliding/swing-type portable terminal capable of positioning liquid crystal display at center portion thereof and method of using the same**
Tragbares Endgerät mit Gleit-/Schwenk-Mechanismus und Funktion zur zentralen Positionierung der Flüssigkristallanzeige sowie Verwendungsverfahren dafür
Terminal portatif coulissant et oscillant capable de positionner l'affichage à cristaux liquides dans la portion centrale correspondante et son procédé de fabrication

(30) Priority: 26.01.2006 KR 20060008477; 30.10.2006 KR 20060105686
(43) Date of publication of application: 01.08.2007
(73) Proprietor: Samsung Electronics Co., Ltd., Yeongtong-gu Suwon-si, Gyeonggi-do (KR)
(72) Inventor: Lee, Byung-Chan, Yeongtong-gu Suwon-si Gyeonggi-do (KR); Jung, Soo-Ik, Yeongtong-gu Suwon-si Gyeonggi-do (KR); Kim, Jong-Yang, Yeongtong-gu Suwon-si Gyeonggi-do (KR)
(74) Representative: Hutter, Jacobus Johannes

(56) References cited:
- EP-A- 1 531 604
- JP-A- 2006 019 925
- US-A1- 2004 137 940
- US-A1- 2004 206 876

## Description

### BACKGROUND OF THE INVENTION

### Field of the Invention:

The present invention relates to a sliding/swing-type portable terminal comprising a liquid crystal display. More particularly, the present invention relates to a portable terminal which can guide and move the liquid crystal display toward a center portion thereof when the terminal rotates.

### Description of the Related Art:

Portable communication terminals generally refer to electronic devices which may be carried with a user while the user communicates wirelessly with another user. Such portable communication devices include Hand-Held Phones (HHP), CT-2, cellular phones, digital phones, Personal Communication System (PCS) phones, and Personal Digital Assistants (PDAs). Conventional portable terminals may be classified into various types according to their appearance, such as bar-type portable terminals, flip-type portable terminals, and folder-type portable terminals. The bar-type portable terminal has a single housing shaped like a bar. The flip-type portable terminal has a flip panel which is pivotally mounted to a bar-shaped housing by a hinge unit. The folder-type portable terminal has a folder coupled to a single bar-shaped housing by a hinge unit that facilitates the rotation of the folder so that it can be folded or unfolded from the housing. Further, portable terminals may be classified as neck wearable-type terminals and wrist wearable-type terminals, according to the position or way in which a user wears the terminal. A user wears the neck wearable-type terminal around the neck using a lanyard or necklace. Alternatively, the user wears the wrist wearable-type terminal around the wrist. Additionally, portable terminals may be classified as rotation-type terminals, sliding-type terminals, and sliding/swing-type terminals according to the manner of opening and closing the terminal. In the rotation-type portable terminal, two housings are coupled to each other in a manner such that one housing rotates to be opened or closed relative to the other while facing each other. In the sliding-type portable terminal, two housings are coupled to each other in a manner such that one housing slides to be opened or closed relative to the other. In the sliding/swing-type portable terminal, two housing are coupled to each other in a manner that one housing swings on the other after sliding on the other housing.

The conventional portable terminal essentially includes an antenna, data input/output units, data transmitter and data receiver. A keypad is used as the data input unit, on which a user can press keys with his/her fingers to input data. A touch pad or a touch screen may also be used as the data input unit.

A liquid crystal display unit is also generally used as the data output unit to display data.

Further, the conventional portable terminal may be provided with a camera lens. Therefore, it is possible to perform image communication with a desired partner or to photograph a desired subject.

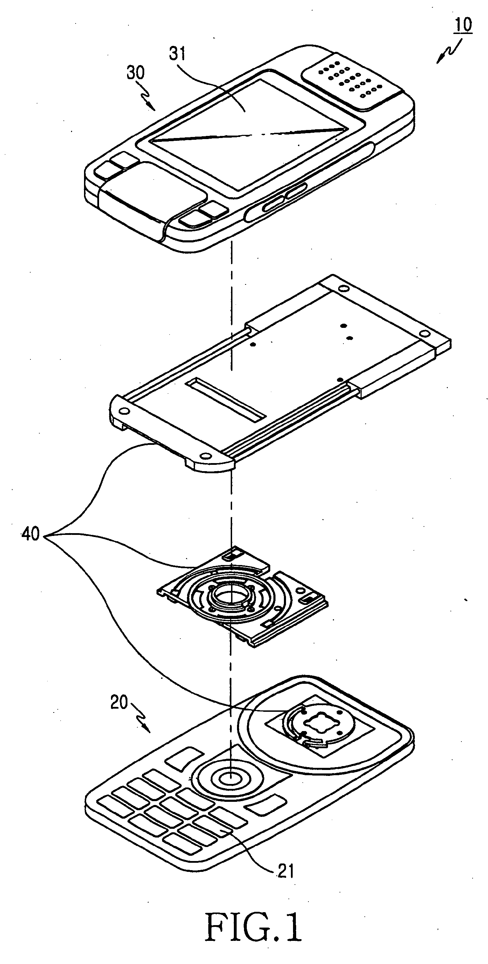

As illustrated in FIG. 1, the sliding/swing-type portable terminal 10 includes a body housing 20, a sliding housing 30 sliding and swinging on the body housing 20 to be opened and closed while facing the body housing 20. The sliding/swing-type portable terminal 10 also includes a sliding/swing hinge device 40 to allow the sliding housing 30 to slide and swing on the body housing 20.

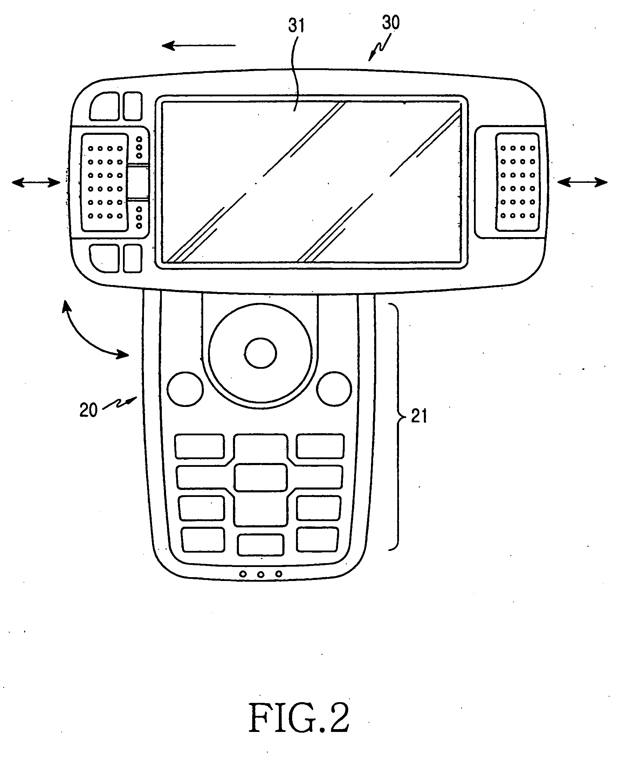

FIGS. 1 and 2 illustrate the body housing 20 with a keypad 21 including a plurality of keys arranged thereon. The sliding housing 30 also includes a liquid crystal display unit 31.

However, in the conventional sliding/swing-type portable terminal, the liquid crystal display unit of the sliding housing is located in a position that does not have a common center with the center portion of the body housing when the sliding housing slides and swings. Accordingly, the liquid crystal display unit must be inconveniently shifted to the center portion of the body housing after the sliding housing swings.

In order to overcome the above-mentioned defect, the hinge device must have a separate guide unit and stopper. In this case, the portable terminal is required to have sufficient space to mount the guide unit and stopper. This produces an increase in the volume of the portable terminal and reduces the ability of the portable terminal to be miniaturized. In addition, there is an increase in the number of parts which thereby increases manufacturing costs and assembly time.

US 2004137940 (A1) discloses a portable wireless terminal device which has a main body comprising a first case provided with a plurality of manual keys, a second case provided with a display having a rectangular screen of a predetermined aspect ratio, and a connecting mechanism for interconnecting the two cases. The connecting mechanism comprises a pivot mechanism for rotating the second case relative to the first case along a plane parallel to the screen. For wireless communication, the display is activated in a screen position wherein the screen is elongated vertically. For receiving a television broadcast, the display is activated in a screen position wherein the screen is elongated horizontally.

Accordingly, there is a need for an improved system and method for improving the display capabilities of a liquid crystal display unit and for increasing convenience to a user.

### SUMMARY OF THE INVENTION

An object of exemplary embodiments of the present invention is to address at least the above problems and/or disadvantages and to provide at least the advantages described below. Accordingly, an object of exemplary embodiments of the present invention is to provide a sliding/swing-type portable terminal having a liquid crystal display unit, which has a guide device to guide the liquid crystal display unit to a center portion of the terminal when the terminal swings, thereby improving the displaying function of the liquid crystal display unit and user's convenience.

In an exemplary embodiment of the present invention, a sliding/swing-type portable terminal with a liquid crystal display unit is provided. A hinge device is eccentrically mounted on the terminal to facilitate the shift of the liquid crystal display unit along the hinge axis of the eccentric hinge device to the center portion of the terminal.

According to another exemplary embodiment of the present invention, a swing-type portable terminal is provided. In this swing-type portable terminal, a swing housing can swing clockwise and counterclockwise along a desired trajectory and a central axis of the swing housing can be shifted, thereby positioning the liquid crystal display unit of the swing housing at the center portion of the body housing.

According to another exemplary embodiment of the present invention, a sliding/swing-type portable terminal is provided. The sliding/swing-type portable terminal comprises a body housing, a sliding housing and a sliding/swing hinge device. The sliding housing is provided with a liquid crystal display unit and sliding and swinging on the body housing to be opened and closed. The sliding/swing hinge device allows the sliding housing to slide and swing on the body housing and includes a guide bar provided on the sliding housing and a guide member provided to the body housing for guiding the sliding and swinging movement of the guide bar. When the sliding housing swings, the guide member guides the movement of the guide bar at a termination position of the sliding movement of the sliding housing so that the liquid crystal display unit of the sliding housing is positioned at a center portion of the body housing.

According to another exemplary embodiment of the present invention, a swing-type portable terminal is provided. The swing-type portable terminal comprises a body housing, a swing housing, a guide pin and at least one guide member. A swing housing is provided with a liquid crystal display unit and rotates around a hinge axis extending perpendicularly to an upper surface of the body housing while facing the body housing. A guide pin is provided to the swing housing. At least one guide member is provided to the body housing to guide the movement of the guide pin along a predetermined trajectory to move a central axis of the swing housing when the swing housing swings clockwise or counterclockwise and to position the liquid crystal display unit of the swing housing at the center portion of the body housing.

Other objects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary objects, features, and advantages of certain exemplary embodiments of the present invention will be more apparent from the following description taken in conjunction with the accompanying drawings, in which:
FIG. 1 is an exploded perspective view illustrating a configuration of a sliding hinge device of a conventional sliding/swing-type portable terminal;
FIG. 2 is a front view illustrating the conventional sliding/swing-type portable terminal, in which a sliding hinge device is assembled with the sliding/swing-type portable terminal;
FIG. 3 is an exploded perspective view showing a configuration of a sliding/swing-type portable terminal capable of positioning a liquid crystal display at the center portion thereof according to the first exemplary embodiment of the present invention;
FIG. 4 is a perspective view illustrating the sliding/swing-type portable terminal capable of positioning the liquid crystal display at the center portion thereof according to the first exemplary embodiment of the present invention, before the assembly of the sliding/swing-type portable terminal;
FIG. 5 is a perspective view illustrating the sliding/swing-type portable terminal capable of positioning the liquid crystal display at the center portion thereof according to the first exemplary embodiment of the present invention, before the sliding movement of the portable terminal;
FIG. 6 is a front view illustrating the sliding/swing-type portable terminal capable of positioning the liquid crystal display at the center portion thereof according to the first exemplary embodiment of the present invention, after the sliding movement of the portable terminal;
FIG. 7 is a front view illustrating the sliding/swing-type portable terminal capable of positioning the liquid crystal display at the center portion thereof according to the first exemplary embodiment of the present invention, in which the portable terminal rotates;
FIG. 8 is a front view illustrating the sliding/swing-type portable terminal capable of positioning the liquid crystal display at the center portion thereof according to the first exemplary embodiment of the present invention, in which the portable terminal rotates;
FIG. 9 is an exploded perspective view illustrating the configuration of a sliding/swing-type portable terminal capable of positioning a liquid crystal display at the center portion thereof according to the second exemplary embodiment of the present invention;
FIG. 10 is a perspective view illustrating the sliding/swing-type portable terminal capable of positioning the liquid crystal display at the center portion thereof according to the second exemplary embodiment of the present invention;
FIG. 11 is a perspective view illustrating the sliding/swing-type portable terminal capable of positioning the liquid crystal display at the center portion thereof according to the second exemplary embodiment of the present invention, in which a rotation housing rotates at an angle of 180 degrees;
FIG. 12 is a front view illustrating the sliding/swing-type portable terminal capable of positioning the liquid crystal display at the center portion thereof according to the second exemplary embodiment of the present invention, in which the rotation housing rotates at an angle of 180 degrees;
FIG. 13 is a front view illustrating the sliding/swing-type portable terminal capable of positioning the liquid crystal display at the center portion thereof according to the second exemplary embodiment of the present invention, in which the rotation housing rotates counterclockwise after rotation at an angle of 180 degrees;
FIG. 14 is a front view illustrating the sliding/swing-type portable terminal capable of positioning the liquid crystal display at the center portion thereof according to the second exemplary embodiment of the present invention, in which the rotation housing rotates clockwise after rotation at an angle of 180 degrees;
FIG. 15 is a perspective view illustrating the sliding/swing-type portable terminal capable of positioning the liquid crystal display at the center portion thereof according to the second exemplary embodiment of the present invention, before the rotation housing rotates; and
FIG. 16 is a front view illustrating the sliding/swing-type portable terminal capable of positioning the liquid crystal display at the center portion thereof according to the second exemplary embodiment of the present invention, in which the rotation housing rotates clockwise.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

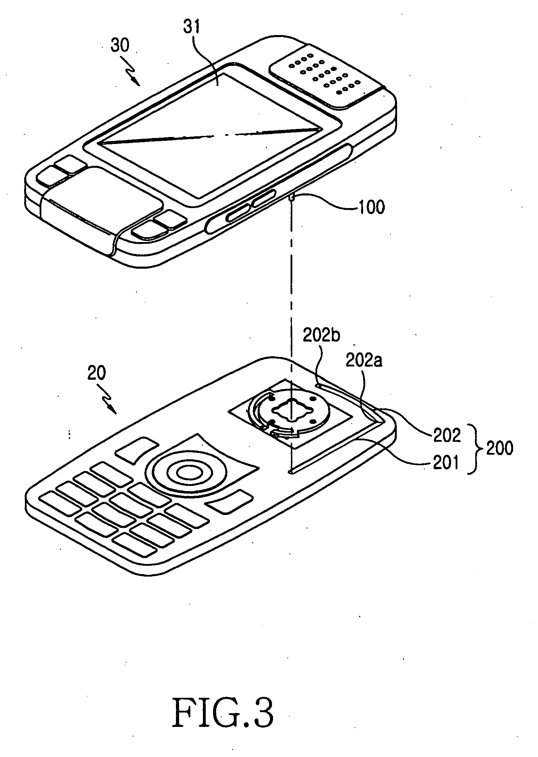

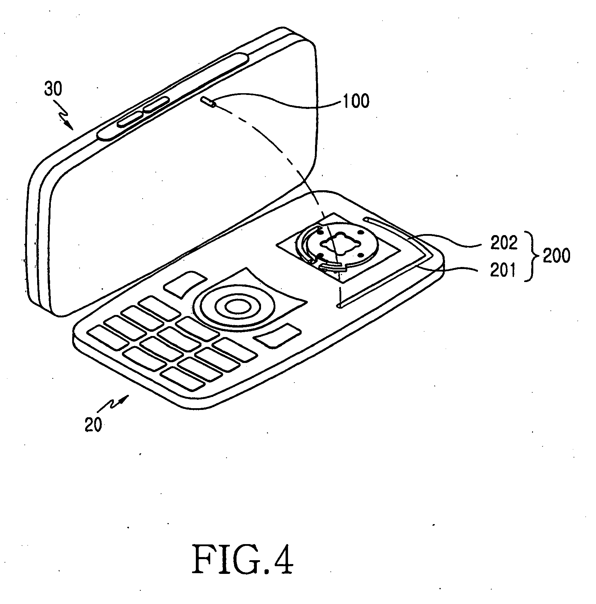

As illustrated in FIGS. 3 and 4, a sliding/swing-type portable terminal 10, according to a first exemplary embodiment of the present invention, includes a body housing 20, a sliding housing 30 provided with a liquid crystal display unit 31 and sliding and swinging on the body housing 20 to be opened and closed, and a sliding/swing hinge device 40 to facilitate the sliding housing's 30 ability to slide. The sliding-type portable terminal capable of positioning the liquid crystal display unit 31 at the center portion thereof is provided with a guide bar 100 and a guide member 200. The guide bar 100 is provided on a rear surface of the sliding housing 30 and inserted into the guide member 200 so as to slide and swing. The guide member 200 is formed on the upper surface of the body housing 20 in order to guide the guide bar 100 so that the guide bar 100 slides and rotates. Further, the guide member 200 guides the movement of the guide bar 100 when the sliding housing 30 swings after the sliding movement of the sliding housing 30. In addition, the guide member 200 guides the sliding housing 30 so that the liquid crystal display unit 31 of the sliding housing is positioned at the center portion of the body housing 20.

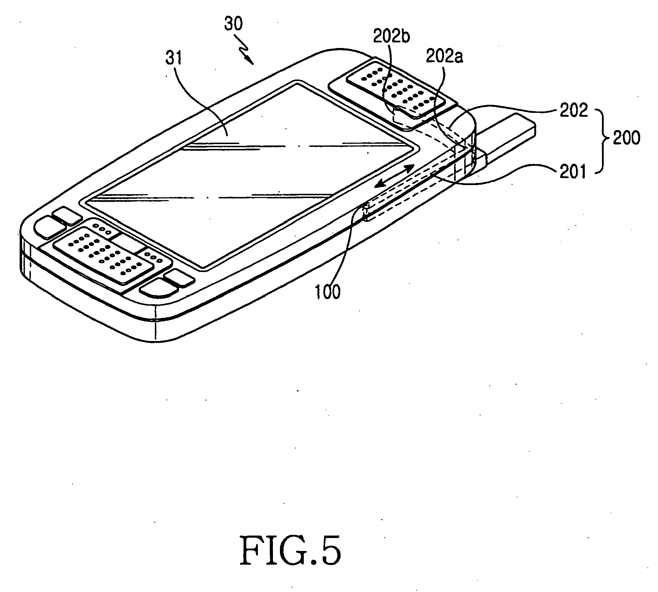

As illustrated in FIG. 5, the guide bar 100 protrudes by a desired length so that the guide bar 100 is inserted into the guide member 200.

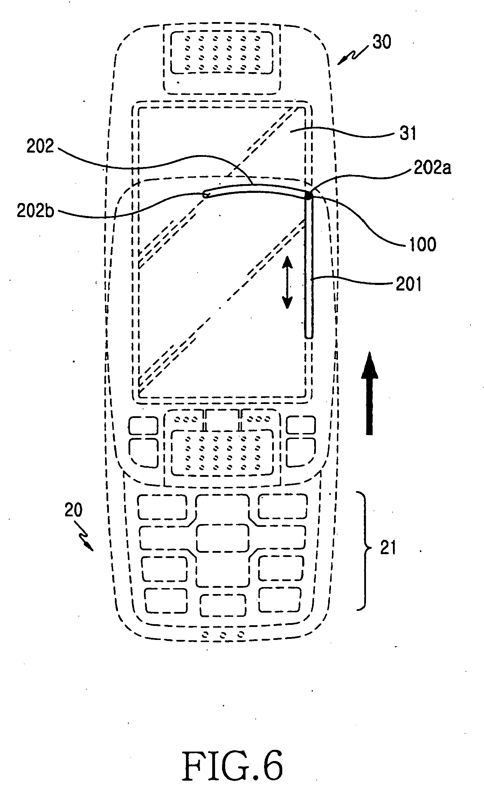

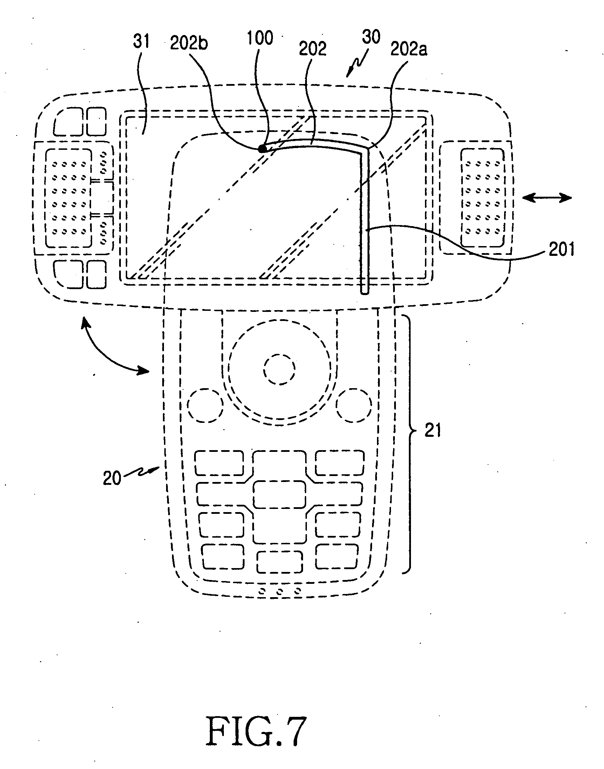

As illustrated in FIGS. 6 and 7, the guide member 200 includes the first and second guide grooves 201 and 202. The first guide groove 201 is formed along a lengthwise direction of the body housing 20 to guide the movement of the guide bar 100 toward a position at which the sliding movement of the sliding housing 30 terminates. The second guide groove 202 is formed at an end of the first guide groove 201 to be perpendicular to the first guide groove 201 so that the guide bar 100 moves along the second guide groove 202 when the sliding housing 30 rotates after the sliding movement of the sliding housing 30 terminates.

As illustrated in FIG. 7, the second guide groove 202 has the first stopper 202a provided at an end to stop the movement of the guide bar 100 at the termination position of the sliding movement, and the second stopper 202b provided at the other end to restrain the movement of the guide bar 100 at the termination position of the rotation.

As illustrated in FIGS. 4 and 6, the guide bar 100 has a cylindrical shape which facilitates easy movement along the first and second guide grooves 201 and 202.

As illustrated in FIGS. 6 and 7, the first and second guide grooves 201 and 202 have a rotated letter "L" shape respectively. Both ends of the first and second guide grooves 201 and 202 are formed of semi-circular shapes in order to receive the guide bar 100. The second guide groove 202 is formed to have a desired curvature to allow a smooth movement of the guide bar 100 when the sliding housing 30 rotates.

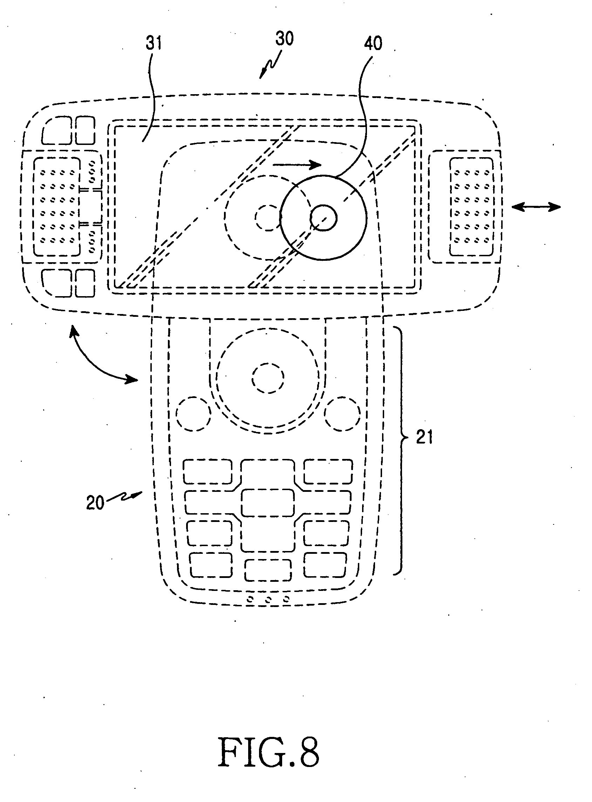

FIG. 8 shows a sliding/swing-type portable terminal 10 according to another exemplary embodiment of the present invention, which can position a liquid crystal display unit 31 at the center portion thereof. Referring to FIG. 8, a sliding/swing hinge device 40 is eccentrically installed on a side of the body housing 20. When the sliding housing 30 rotates, the liquid crystal display unit 31 of the sliding housing 30 can be positioned at the center portion of the body housing 20 by means of the eccentric hinge device.

The operation of the sliding/swing-type portable terminal according to the first exemplary embodiment of the present invention, which can position the liquid crystal display unit at the center portion thereof, will be described in detail with reference to FIGS. 5 to 7.

As illustrated in FIGS. 3 and 4, the sliding/swing-type portable terminal includes the guide bar 100 and the guide member 200 in order to position the liquid crystal display unit 31 at the center portion of the body housing 20.

As illustrated in FIGS. 4 and 5, the guide member 200 includes the first and second guide grooves 201 and 202. When the sliding housing 30 is assembled with the body housing 20 while they face each other, the guide bar 100 is inserted into the first guide groove 201.

As illustrated in FIG. 4, the guide bar 100 protrudes by a desired length, and the first and second grooves 201 and 202 are formed to be concave with a desired depth.

As illustrated in FIG. 6, when the sliding housing 30 moves away from the body housing, the guide bar 100 moves along with the sliding housing 30. According to an exemplary implementation, the guide bar 100 moves along the first guide groove 201.

When the sliding housing 30 reaches the position of terminating the sliding movement thereof, the guide bar 100 stops the movement thereof once it makes contact with the first stopper 202a formed at one end of the second guide groove 202.

According to an exemplary implementation, as illustrated in FIG. 7, the guide bar 100 moves along with the sliding housing 30 when the sliding housing 30 rotates. The guide bar 100 moves along the second guide groove 202.

Since the second guide groove 202 is formed to have a desired curvature, the guide bar 100 can easily move along with the sliding housing 30.

At this time, the guide bar 100 makes contact with the second stopper 202b formed at the other end of the second guide groove 202 and stops its movement.

According to an exemplary implementation, the liquid crystal display unit 31 of the sliding housing 30 is positioned at the center portion of the body housing 20.

The user can play a game or watch TV through the liquid crystal display unit 31 positioned at the center portion of the body housing 20.

The sliding/swing-type portable terminal 10, according to another exemplary embodiment of the present invention, which can position the liquid crystal display unit 31 at the center portion thereof, will be described.

FIG. 8 illustrates the sliding/swing-type portable terminal capable of positioning the liquid crystal display unit at the center portion thereof. In the sliding/swing-type portable terminal, the sliding/swing hinge device 40 is eccentrically mounted on a side of the body housing 20 to allow the sliding housing 30 to rotate about a hinge axis of the eccentric hinge device. As a result, the liquid crystal display unit 31 of the sliding housing 30 is positioned at the center portion of the body housing 20.

Since the sliding/swing hinge device 40 is eccentrically mounted on a side of the body housing 20 without the use of a separate device, it is possible to easily position the liquid crystal display unit 31 of the sliding housing at the center portion of the body housing 20. Further, it is possible to decrease the number of the parts and reduce manufacturing costs. The portable terminal may also be miniaturized because a separate installing space is unnecessary.

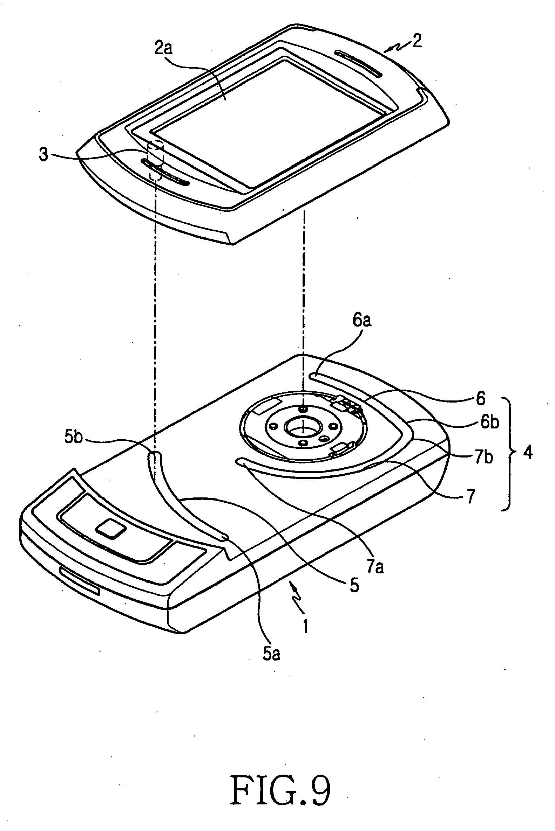

The operation of the swing-type portable terminal, according to the second exemplary embodiment of the present invention, which has the configuration as described above and can position the liquid crystal display unit at the center portion thereof, will be described in detail with reference to FIGS. 9 to 16.

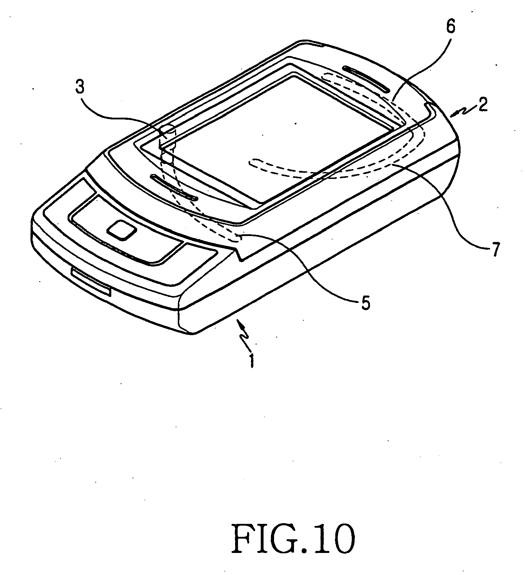

As illustrated in FIGS. 9 and 10, the swing-type portable terminal capable of positioning a liquid crystal display unit 2a at the center portion thereof includes a body housing 1, a swing housing 2, a guide pin 3, and a guide member 4.

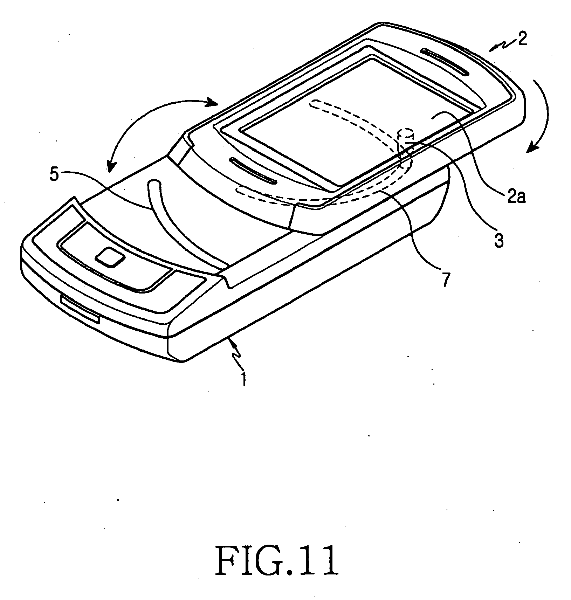

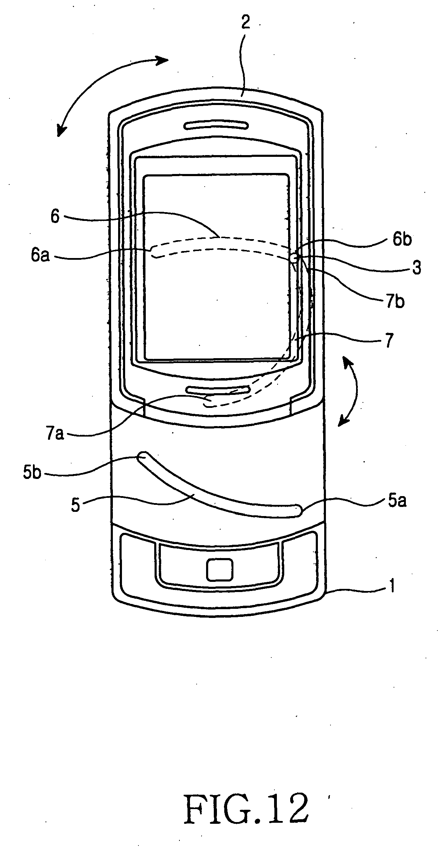

As illustrated in FIGS. 11 and 12, the swing housing 2 is rotated by an angle of 180 degrees about a hinge axis Al extending perpendicularly to an upper surface of the body housing 1 while facing the body housing 1.

At this time, the guide pin 3 provided to the swing housing 2 is movably received in the guide member 4.

According to an exemplary implementation, the guide pin 3 includes a pogo pin. The guide pin 3 is out of the guide member 4 when the swing housing 2 does not swing, while rotating along with the swing housing 2 and being inserted into the guide member 4 when the swing housing 2 rotates by an angle of 180 degrees.

The guide member 4 includes first, second, and third guide grooves 5, 6 and 7.

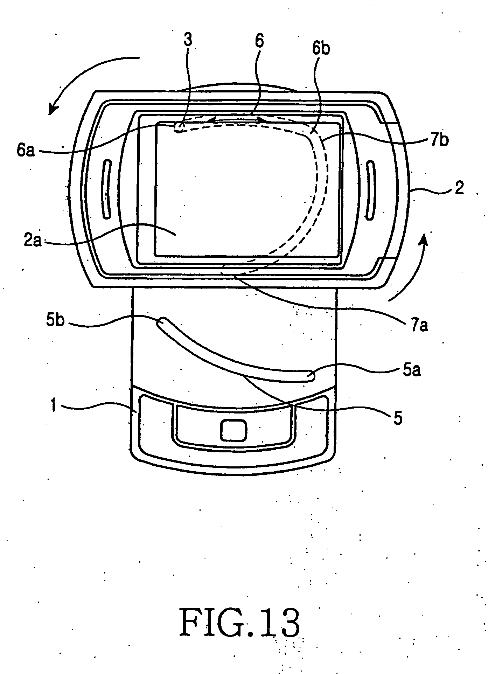

As illustrated in FIG. 13, the pogo pin 3 is inserted into the second and third guide grooves 6 and 7. When the swing housing 2 rotates counterclockwise, the pogo pin 3 rotates along with the swing housing 2 and moves along a predetermined trajectory to shift the central axis of the swing housing 2. Accordingly, the liquid crystal display unit 2a provided on the swing housing 2 is positioned at the center portion of the body housing 1.

The pogo pin 3 of the swing housing 2 departs from the second stopper 6b, and simultaneously moves along a predetermined trajectory in the second guide groove 6 with a desired curvature. The pogo pin 3 makes contact with the first stopper 6a formed at the other end of the second guide groove 6 and stops its movement. While the swing housing 2 swings, the central axis of the swing housing 2 moves so that the liquid crystal display unit 2a of the swing housing 2 is positioned at the center portion of the body housing 1.

According to an exemplary implementation, the user can play a game or watch TV through the liquid crystal display unit positioned at the center portion of the body housing 1.

According to an exemplary implementation, when the swing housing 2 of FIG. 12 is swung clockwise again, the swing housing 2 returns to an initial position. The pogo pin 3 departs from the first stopper 6a and makes contact with the second stopper 6b to stop its movement at a swing stopping position.

The swing housing 2 rotates at an angle of 180 degrees and returns to the initial position.

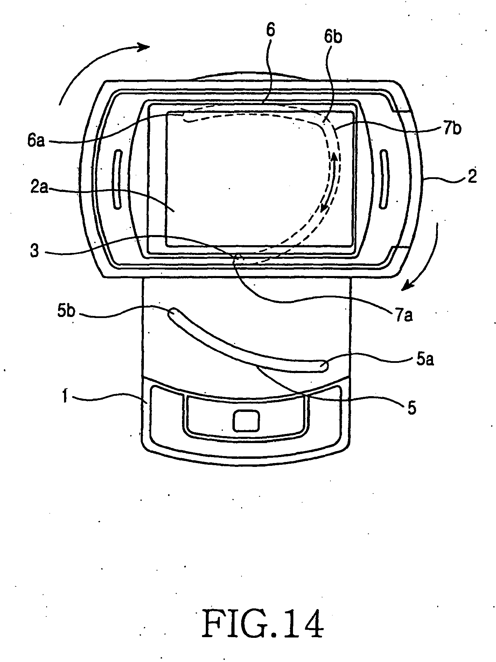

In this state, as illustrated in FIG. 14, when the swing housing 2 rotates clockwise, the pogo pin 3 moves along with the swing housing 2 while moving along a predetermined trajectory in the third guide groove 7 to shift the central axis of the swing housing 2. Accordingly, the liquid crystal display unit 2a provided on the swing housing 2 can be positioned at the center portion of the body housing 1.

The pogo pin 3 of the swing housing 2 departs from the second stopper 7b formed in the third guide groove 7 and simultaneously moves along a predetermined trajectory in the third guide groove 7 with the desired curvature. The pogo pin 3 makes contact with the first stopper 7a formed at the other end of the third guide groove 3 and stops its movement. When the swing housing 2 rotates, the central axis of the swing housing 2 is simultaneously shifted so that the liquid crystal display unit 2a of the swing housing 2 is positioned at the center portion of the body housing 1.

According to an exemplary implementation, the user can play a game or watch TV through the liquid crystal display unit 2a positioned at the center portion of the body housing.

As illustrated in FIGs. 12 and 14, when the swing housing 2 rotates clockwise again and returns to the initial position, the pogo pin 3 departs from the first stopper 7a and makes contact with the second stopper 7b to stop its movement at the swing termination position.

The swing housing 2 returns to the initial position by swinging by an angle of 180 degrees.

In this state, as illustrated FIG. 10, the swing housing 2 rotates by an angle of 180 degrees counterclockwise and faces the body housing 1.

According to an exemplary implementation, the pogo pin 3 moves along with the swing housing 2 and is inserted into the first guide groove 5.

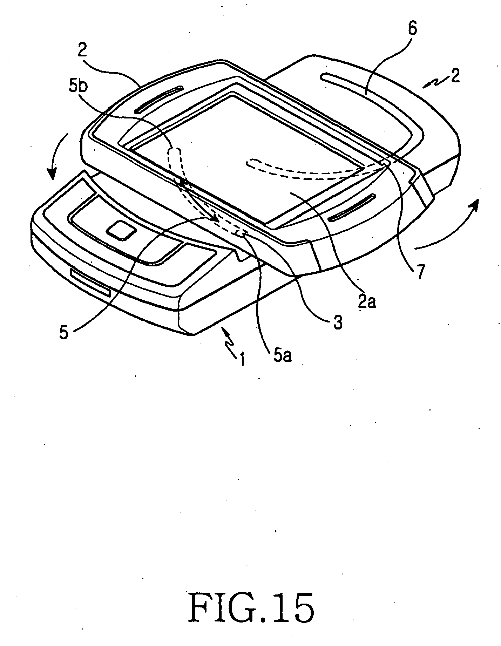

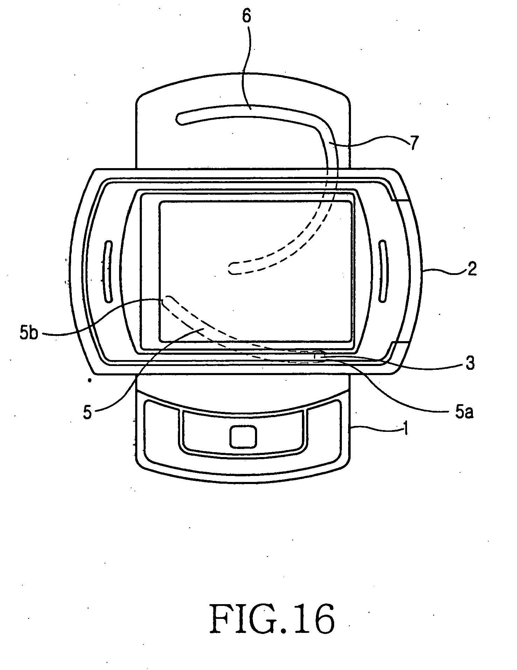

As illustrated in FIGS. 15 and 16, when the swing housing 2 rotates counterclockwise, the pogo pin 3 moves along with the swing housing 2 along a predetermined trajectory in the first guide groove 5, and thereby the central axis of the swing housing 2 is shifted. Accordingly, the liquid crystal display device 2a provided on the swing housing 2 is positioned at the center portion of the body housing 1.

According to an exemplary implementation, the pogo pin 3 of the swing housing 2 departs from the second stopper 5b formed in the first guide groove 5 and simultaneously moves along a predetermined trajectory in the guide groove 5 having the desired curvature. Then, the pogo pin 3 makes contact with the first stopper 5a formed at the other end of the first guide groove 5 to stop its movement. When the swing housing moves, the central axis of the swing hinge 2 is shifted so that the liquid crystal display unit 2a of the swing housing 2 rotates about the center portion of the body housing 1.

According to an exemplary implementation, the user can play a game or watch TV through the liquid crystal display unit 2a which is positioned at the center portion of the body housing 1.

According to an exemplary implementation, when the swing housing 2 rotates clockwise again and returns to the initial position, the pogo pin 3 departs from the first stopper 5a and makes contact with the second stopper 5b to stop its movement at the position of terminating its movement.

As illustrated in FIG. 10, the swing housing 2 returns to the initial position with facing the body housing 1.

The present invention is applicable to all types of portable terminals.

While the present invention has been shown and described with reference to certain exemplary embodiments thereof, it will be understood by those skilled in the art that various changes in form and details may be made therein without departing from the scope of the invention as defined by the appended claims and their equivalents.

## Claims

1. A sliding/swing-type portable terminal (10) comprising:
a body housing (20);
a sliding housing (30) provided with a display unit (31), and sliding and swinging on the body housing to be opened and closed; and
a sliding/swing hinge device (40) for allowing the sliding housing to slide and swing on the body housing, the sliding/swing hinge device comprising a guide bar (100) provided on the sliding housing and a guide member (200) provided to the body housing for guiding the sliding and swinging movement of the guide bar,
wherein the guide member (200) comprises a first guide groove (201) for guiding the movement of the guide bar (100) to a termination position (202a) of the sliding housing, and a second guide groove (202) for guiding the movement of the guide bar when the sliding housing swings at the termination position (202a) of the sliding movement of the sliding housing,
wherein the first and second guide grooves (201, 202) form a capital letter "L" shape, wherein one end of the second guide groove (202) is formed at an end of the first guide groove (201) to be perpendicular to the first guide groove, and the second guide groove (202) comprises a curvature formed as a portion of a semi-circular shape,
wherein the guide member (200) guides the movement of the guide bar (100) to a termination position (202b) of the sliding movement of the sliding housing (30) so that the display unit (31) of the sliding housing is positioned at a center portion of the body housing (20) when the sliding housing (30) swings.

2. The sliding/swing-type portable terminal as claimed in claim 1, wherein the guide bar (100) protrudes with a length corresponding to the guide member (200) to be guided therein.

3. The sliding/swing-type portable terminal as claimed in claim 1, wherein a first stopper (202a) is provided to one end of the second guide groove (202) to stop the movement of the guide bar (100) at a position where the sliding movement of the sliding housing (30) terminates, and a second stopper (202b) is provided to the other end of the second guide groove (202) to stop the movement of the guide bar at a position where the swing movement of the sliding housing terminates.

4. The sliding/swing-type portable terminal as claimed in claim 1, wherein the guide bar (100) comprises a cylindrical shape.

5. The sliding/swing-type portable terminal as claimed in claim 1, wherein the first and second guide grooves (201, 202) respectively comprise an end semi-circularly formed.

6. The sliding/swing-type portable terminal as claimed in claim 1, wherein the first guide groove (201) is formed in a longitudinal direction of the body housing (20).

7. The sliding/swing-type portable terminal as claimed in claim 1, wherein the sliding/swing hinge device (40) is eccentrically mounted on the body housing (20).

8. A method of using a sliding/swing-type portable terminal comprising:
sliding and swinging a sliding housing (20) on a body housing (10);
guiding the sliding and swinging movement of a guide bar (100);
positioning a display unit (31) of the sliding housing at a center portion of the body housing when the sliding housing swings by a guide member (200); and
guiding the movement of the guide bar in a first guide groove (201) to a termination position (202a) and guiding the movement of the guide bar in a second guide groove (202) when the sliding housing swings at the termination position (202a) of the sliding movement of the sliding housing,
wherein the first and second guide grooves (201, 202) form a capital letter "L" shape, wherein one end of the second guide groove (202) is formed at an end of the first guide groove (201) to be perpendicular to the first guide groove, and the second guide groove (202) comprises a curvature formed as a portion of a semi-circular shape.

9. The method of claim 8, wherein the guide bar (100) protrudes with a length corresponding to the guide member (200) to be guided therein.

## Patentansprüche

1. Gleit-/schwenk-artiges tragbares Endgerät (10) aufweisend:
ein Körpergehäuse (20);
ein Gleitgehäuse (30), das mit einer Anzeigeeinheit (31) und mit einem Gleiten und Schwenken auf dem Körpergehäuse bereitgestellt wird, um geöffnet und geschlossen zu werden; und
eine Gleit-/Schwenk-Scharniervorrichtung (40), um dem Gleitgehäuse zu erlauben auf dem Körpergehäuse zu gleiten und zu schwenken, wobei die Gleit-/Schwenk-Scharniervorrichtung einen Führungsstift (100), der auf dem Gleitgehäuse bereitgestellt wird, und ein Führungsbauteil (200), das auf dem Körpergehäuse bereitgestellt wird, aufweist zum Führen der Gleit- und Schwenkbewegung des Führungsstifts,
wobei das Führungsbauteil (200) eine erste Führungsnut (201) zum Führen der Bewegung des Führungsstifts (100) zu einer Endposition (202a) des Gleitgehäuses, und eine zweite Führungsnut (202) zum Führen der Bewegung des Führungsstifts, wenn das Gleitgehäuse an der Endposition (202a) der Gleitbewegung des Gleitgehäuses schwenkt, umfasst,
wobei die erste Führungsnut (201) und die zweite Führungsnut (202) eine Form eines Großbuchstabens "L" bilden, wobei ein Ende der zweiten Führungsnut (202) an einem Ende der ersten Führungsnut (201) ausgebildet ist, um senkrecht zu der ersten Führungsnut zu sein, und die zweite Führungsnut (202) eine Kurvenform aufweist, die als ein Abschnitt einer halbkreisförmigen Form ausgebildet ist,
wobei das Führungsbauteil (200) die Bewegung des Führungsstifts (100) zu einer Endposition (202b) der Gleitbewegung des Gleitgehäuses (30) führt, so dass die Anzeigeeinheit (31) des Gleitgehäuses an einem mittleren Abschnitt des Körpergehäuses (20) positioniert wird, wenn das Gleitgehäuse (30) schwenkt.

2. Gleit-/schwenk-artiges tragbares Endgerät nach Anspruch 1, wobei der Führungsstift (100) mit einer Länge hervor steht, die mit dem Führungsbauteil (200) korrespondiert, um darin geführt zu werden.

3. Gleit-/schwenk-artiges tragbares Endgerät nach Anspruch 1, wobei ein erster Stopper (202a) an einem Ende der zweiten Führungsnut (202) bereitgestellt wird, um die Bewegung des Führungsstifts (100) an einer Position zu stoppen, wo die Gleitbewegung des Gleitgehäuses (30) endet, und ein zweiter Stopper (202b) an dem anderen Ende der zweiten Führungsnut (202) bereitgestellt wird, um die Bewegung des Führungsstifts an einer Position zu stoppen, wo die Schwenkbewegung des Gleitgehäuses endet.

4. Gleit-/schwenk-artiges tragbares Endgerät nach Anspruch 1, wobei der Führungsstift (100) eine zylindrische Form aufweist.

5. Gleit-/schwenk-artiges tragbares Endgerät nach Anspruch 1, wobei die erste Führungsnut (201) und die zweite Führungsnut (202) jeweils ein halbkreisförmig ausgebildetes Ende aufweist.

6. Gleit-/schwenk-artiges tragbares Endgerät nach Anspruch 1, wobei die erste Führungsnut (201) in einer Längsrichtung des Körpergehäuses (20) ausgebildet ist.

7. Gleit-/schwenk-artiges tragbares Endgerät nach Anspruch 1, wobei die Gleit-/Schwenk-Scharniervorrichtung (40) exzentrisch auf dem Körpergehäuse (20) montiert ist.

8. Verfahren zur Verwendung eines Gleit-/schwenk-artigen tragbaren Endgeräts, aufweisend:
ein Gleiten und Schwenken eines Gleitgehäuses (20) auf einem Körpergehäuse (10);
ein Führen der Gleit- und Schwenkbewegung eines Führungsstifts (100);
ein Positionieren einer Anzeigeeinheit (31) des Gleitgehäuses an einem mittleren Abschnitt des Körpergehäuses, wenn das Gleitgehäuse durch ein Führungsbauteil (200) schwenkt; und
ein Führen der Bewegung des Führungsstifts in einer ersten Führungsnut (201) zu einer Endposition (202a) und ein Führen der Bewegung des Führungsstifts in einer zweiten Führungsnut (202), wenn das Gleitgehäuse an der Endposition (202a) der Gleitbewegung des Gleitgehäuses schwenkt, wobei die erste Führungsnut (201) und die zweite Führungsnut (202) eine Form eines Großbuchstabens "L" bilden, wobei ein Ende der zweiten Führungsnut (202) an einem Ende der ersten Führungsnut (201) ausgebildet ist, um senkrecht zu der ersten Führungsnut zu sein, und die zweite Führungsnut (202) eine Kurvenform aufweist, die als ein Abschnitt einer halbkreisförmigen Form ausgebildet ist.

9. Verfahren nach Anspruch 8, wobei der Führungsstift (100) mit einer Länge hervor steht, die mit dem Führungsbauteil (200) korrespondiert, um darin geführt zu werden.

## Revendications

1. Terminal portable du type coulissant/pivotant (10) comprenant un boîtier de base (20), un boîtier coulissant (30) pourvu d'une unité d'affichage (31) et pouvant coulisser et pivoter sur le boîtier de base pour être ouvert et fermé, et un dispositif de charnière coulissante/pivotante (40) permettant au boîtier coulissant de coulisser et pivoter sur le boîtier de base, le dispositif de charnière coulissante/pivotante comprenant une barre de guidage (100) prévue sur le boîtier coulissant et un élément de guidage (200) prévu sur le boîtier de base pour guider le mouvement coulissant et pivotant de la barre de guidage, dans lequel l'élément de guidage (200) comprend une première rainure de guidage (201) pour guider le mouvement de la barre de guidage (100) vers une position terminale (202a) du boîtier coulissant et une seconde rainure de guidage (202) pour guider le mouvement de la barre de guidage quand le boîtier coulissant pivote vers la position terminale (202a) du mouvement coulissant du boîtier coulissant, dans lequel les première et seconde rainures de guidage (201, 202) forment un « L » majuscule, une extrémité de la seconde rainure de guidage (202) étant formée à une extrémité de la première rainure de guidage (201) de manière à être perpendiculaire à la première rainure de guidage, et la seconde rainure de guidage (202) présentant une courbure conformée en partie de forme semi-circulaire, dans lequel l'élément de guidage (200) guide le mouvement de la barre de guidage (100) vers une position terminale (202b) du mouvement coulissant du boîtier coulissant (30), de façon que, quand le boîtier coulissant (30) pivote, l'unité d'affichage (31) du boîtier coulissant soit positionnée dans une partie centrale du boîtier de base (20).

2. Terminal portable du type coulissant/pivotant selon la revendication 1, dans lequel la barre de guidage (100) fait saillie sur une longueur qui correspond à l'élément de guidage (200) afin d'y être guidée.

3. Terminal portable du type coulissant/pivotant selon la revendication 1, dans lequel une première butée (202a) est prévue à une extrémité de la seconde rainure de guidage (202) pour arrêter le mouvement de la barre de guidage (100) dans une position où le mouvement coulissant du boîtier coulissant (30) se termine, et une seconde butée (202b) est prévue à l'autre extrémité de la seconde rainure de guidage (202) pour arrêter le mouvement de la barre de guidage dans une position où le mouvement pivotant du boîtier coulissant se termine.

4. Terminal portable du type coulissant/pivotant selon la revendication 1, dans lequel la barre de guidage (100) a une forme cylindrique.

5. Terminal portable du type coulissant/pivotant selon la revendication 1, dans lequel les première et seconde rainures de guidage (201, 202) ont chacune une extrémité de forme semi-circulaire.

6. Terminal portable du type coulissant/pivotant selon la revendication 1, dans lequel la première rainure de guidage (201) est formée dans une direction longitudinale du boîtier de base (20).

7. Terminal portable du type coulissant/pivotant selon la revendication 1, dans lequel le dispositif de charnière coulissante/pivotante (40) est monté excentriquement sur le boîtier de base (20).

8. Procédé d'utilisation d'un terminal portable du type coulissant/pivotant consistant à faire coulisser et pivoter un boîtier coulissant (20) sur un boîtier de base (10), guider le mouvement coulissant et pivotant d'une barre de guidage (100), positionner une unité d'affichage (31) du boîtier coulissant dans une partie centrale du boîtier de base quand le boîtier coulissant pivote par un élément de guidage (200), et
guider le mouvement de la barre de guidage dans une première rainure de guidage (201) vers une position terminale (202a) et guider le mouvement de la barre de guidage dans une seconde rainure de guidage (202) quand le boîtier coulissant pivote à la position terminale (202a) du mouvement coulissant du boîtier coulissant, les première et seconde rainures de guidage (201, 202) formant un « L » majuscule, une extrémité de la seconde rainure de guidage (202) étant formée à une extrémité de la première rainure de guidage (201), de manière à être perpendiculaire à la première rainure de guidage, et la seconde rainure de guidage (202) comprenant une courbure formée comme une partie d'une forme semi-circulaire.

9. Procédé selon la revendication 8, dans lequel la barre de guidage (100) fait saillie d'une longueur qui correspond à l'élément de guidage (200) afin d'y être guidée.
